# EUROPEAN PATENT SPECIFICATION

(11) **EP 1 544 718 B1**
(45) Date of publication and mention of the grant of the patent: **02.06.2010**
(21) Application number: 03816162.6
(22) Date of filing: 06.03.2003
(51) Int. Cl.: G06F 3/033, G06F 3/048

(54) **PORTABLE ELECTRONIC DEVICE**
TRAGBARES ELEKTRONISCHES GERÄT
DISPOSITIF ELECTRONIQUE PORTABLE

(43) Date of publication of application: 22.06.2005
(73) Proprietor: FUJITSU LIMITED, Kawasaki-shi, Kanagawa 211-8588 (JP)
(72) Inventor: YOSHIOKA, T., FUJITSU LIMITED, Kawasaki-shi, Kanagawa 211-8588 (JP)
(74) Representative: Körfer, Thomas
(86) International application number: PCT/JP2003/002653
(87) International publication number: WO 2004/079556

(56) References cited:
- EP-A- 0 747 835
- JP-A- 3 061 997
- JP-A- 7 093 124
- JP-A- 62 035 933
- JP-A- 2000 293 290
- JP-A- 2001 282 386
- JP-U- 62 037 336
- US-A- 5 900 875
- US-B1- 6 198 474
- PATENT ABSTRACTS OF JAPAN vol. 2000, no. 13, 5 February 2001 (2001-02-05) -& JP 2000 293290 A (FUJITSU LTD; PFU LTD), 20 October 2000 (2000-10-20)
- PATENT ABSTRACTS OF JAPAN vol. 1997, no. 09, 30 September 1997 (1997-09-30) -& JP 09 134248 A (TOSHIBA CORP), 20 May 1997 (1997-05-20)
- PATENT ABSTRACTS OF JAPAN vol. 2002, no. 09, 4 September 2002 (2002-09-04) -& JP 2002 149334 A (SEIKO EPSON CORP), 24 May 2002 (2002-05-24)
- PATENT ABSTRACTS OF JAPAN vol. 016, no. 373 (P-1400), 11 August 1992 (1992-08-11) & JP 04 118715 A (NIHON AI ENU ESU:KK), 20 April 1992 (1992-04-20)
- WILLIAMS J A: "Keyboard Cursor Control Layout" IBM TECHNICAL DISCLOSURE BULLETIN, IBM CORP. NEW YORK, US, vol. 26, no. 4, 1 September 1983 (1983-09-01), pages 1967-1968, XP002226449 ISSN: 0018-8689

## Description

### BACKGROUND OF THE INVENTION

### 1. Field of The Invention

The present invention relates to a portable electronic apparatus, such as PDA, which can perform viewing and editing of the data on the screen of the display unit.

### 2. Description of The Related Art

The conventional compact type PDA (portable digital assistant) is aimed at the miniaturization by omitting the keyboard, and it is a portable electronic apparatus that enables the user to perform operation by the single hand. There are various products of the portable electronic apparatus which have been developed as the personal information-management tool and have been put in practical use.

For example, there is a known compact type PDA which can perform viewing and editing of the data by being interacted with the personal computer, and can perform transmission and reception of an e-mail or facsimile and accessing of the Internet by using the modem or the cellular phone.

However, since the keyboard is omitted from the compact type PDA, it is difficult to use the PDA functions only with the PDA main part, and the interaction with the personal computer is indispensable. For this reason, the compact type PDA is unsuitable for the work to input additional data newly, and the usage of the compact type PDA is limited to the viewing function of viewing the data already created on the personal computer, or the editing function of changing a part of the data already created on the personal computer.

One example of the conventional compact type PDA that is widely used is the PDA equipped with the stylus pen as the input device, instead of the mouse or the keyboard. In the PDA of this type, the stylus pen is brought into contact with the touch panel or tablet, and the absolute coordinates of the position where the point contact is made are inputted.

However, it is difficult for the user to operate the stylus pen by the single hand, and there is the problem that the user is unable to perform the viewing and editing of data easily when the user wishes to access a large amount of data on the screen.

In addition, as the conventional technology relevant to this invention, Japanese Laid-Open Patent Application No. 2002-149334 discloses a pointing device which is used for the personal computer or the like. This pointing device is small in size and has a circular shape, and it is provided with the upper-surface circular lid and the pressure sensor mechanism for the purpose of improvement in operability.

Moreover, Japanese Laid-Open Patent Application No. 09-134248 discloses a pointing input device which is used for the remote controller of the television receiving set. This pointing input device is provided with the disc-like operation button and the slide switch. The slide switch is used to detect a slide movement operation on the operation button. A pressure sensor is arranged on each of the four division regions of the operation button respectively and used to detect a depression operation on each division region of the operation button.

Document EP 0 747 835 A1 discloses a vehicle navigation system which is provided with a console including a display screen, a scrolling key and two quick scroll keys. EP 0 747 835 A1 discloses a method and device for selecting an entry stored in a data processing system and, in particular, a system for selecting destinations in a list of destinations for navigation. In this respect, keys are arranged on the device to navigate in the list of destinations. Navigation can be conducted with two speeds of scrolling. Keys perform slow scrolling and keys enable fast scrolling. Additional scrolling support is also provided through the use of an alphabetic scrolling feature. By use of the keys and it is possible to jump from or to preceding or succeeding characters and, thus, progress in the list or the current row.

Document JP 2001 - 32 43 97 A discloses an input device having a 4-way switch in the center surronded by an annular wall. The annular wall is surrounded by a ring of four switches. The annular wall is formed in order to isolate operations addressed to the inner 4 - way switch from operations addressed to the outer ring comprising four switches.

### SUMMARY OF THE INTENTION

The object of the present invention is to provide a portable electronic apparatus in which the operability is improved so that the user can operate the electronic apparatus by the single hand easily even when a large amount of data in the screen is viewed and edited.

Further advantageous modifications of the present invention are subject matter of the dependent claims.

In order to achieve the above-mentioned object, the present invention provides a portable electronic apparatus which includes a display unit, a key operation unit which detects depression operation of each of a first direction key and a second direction key adjacent to the first direction key and outputs a detection signal, and a control unit which controls displaying of a screen of the display unit in accordance with a detection signal from the key operation unit, the control unit comprising: a cursor movement detection unit outputting a cursor movement information for moving the cursor displayed on the screen of the display unit relative to the screen in accordance with a detection signal outputted when the first direction key is depressed solely; and a scrolling movement detection unit outputting a scrolling operation information for carrying out scrolling movement of the screen of the display unit in accordance with a detection signal outputted when both the first direction key and the second direction key are depressed simultaneously.

According to the portable electronic apparatus of the present invention, each of the first direction key and the second direction key adjacent to the first direction key in the key operation unit can be easily depressed by the user by the single hand (the thumb), and one of the cursor movement information for moving the cursor on the screen of the display and the scrolling operation information for carrying out scrolling movement of the screen of the display is selectively outputted to the control unit upon depression. The control unit controls the displaying of the screen of the display in accordance with the received screen-displaying information.

Therefore, according to the portable electronic apparatus of the present invention, even when viewing and editing a large amount of data on the screen, the user can operate the electronic apparatus easily by the single hand (the thumb), and the operability can be raised.

### BRIEF DESCRIPTION OF THE DRAWINGS

Other objects, features and advantages of the present invention will be apparent from the following detailed description when read in conjunction with the accompanying drawings.
FIG. 1 is a diagram showing the portable electronic apparatus in one preferred embodiment of the invention.
FIG. 2 is a diagram for explaining the first scrolling operation which causes the scrolling movement of the screen with the cursor being fixed in the display unit of the portable electronic apparatus of FIG. 1.
FIG. 3 is a diagram for explaining the second scrolling operation which causes the scrolling movement of the screen together with the cursor in the display unit of the portable electronic apparatus of FIG. 1.
FIG. 4 is a diagram showing the composition of the key operation unit in the portable electronic apparatus of FIG. 1.
FIG. 5 is a diagram for explaining the application of the second scrolling operation.
FIG. 6 is a diagram showing a modification of the key operation unit in the portable electronic apparatus of FIG. 1.
FIG. 7 is a diagram showing another modification of the key operation unit in the portable electronic apparatus of FIG. 1.
FIG. 8 is a flowchart for explaining the control procedure when performing the basic operation of the portable electronic apparatus of the invention.
FIG. 9 is a flowchart for explaining the control procedure when performing the setting operation of the application software.
FIG. 10 is a flowchart for explaining the control procedure when starting the map viewing software and performing the viewing operation of the map data.
FIG. 11 is a block diagram showing the composition of the control unit in the portable electronic apparatus of the invention.

### DETAILED DESCRIPTION OF PREFERRED EMBODIMENTS

A description will now be given of the preferred embodiments of the invention with reference to the accompanying drawings.

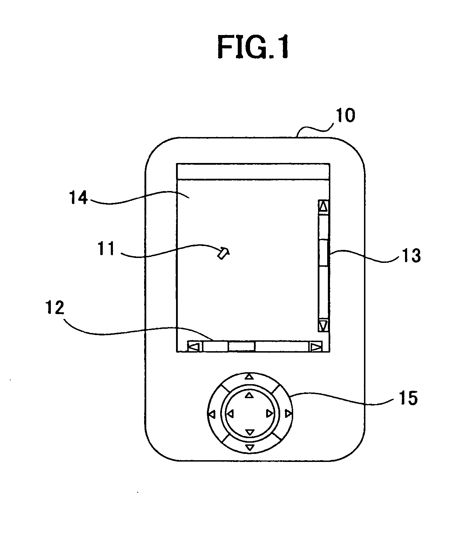

FIG. 1 shows the portable electronic apparatus in the preferred embodiment of the invention. The PDA in which the portable electronic apparatus of the invention is embodied is shown in FIG. 1 as a typical example.

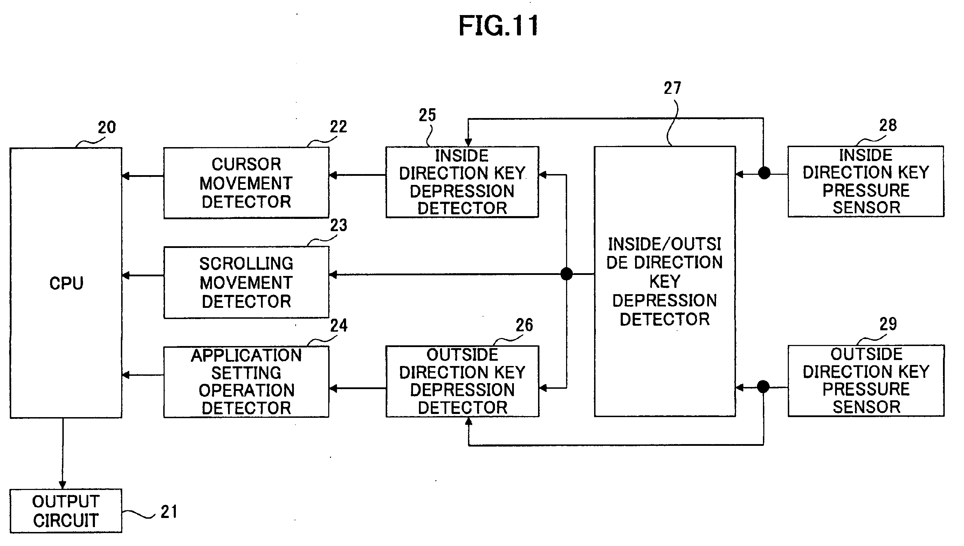

As shown in FIG. 1, the PDA 10 comprises the display unit 14 in which the cursor 11 is displayed on the screen, the key operation unit 15, and the control unit (not shown). The control unit of the PDA 10 will be explained later using FIG. 11.

The display unit 14 comprises the right-and-left scroll bar 12 and the up-and-down scroll bar 13 which are displayed on the bottom side and the left-hand side edges of the screen, and the scroll bar 12 and the scroll bar 13 are interlocked with the right-and-left direction and the up-and-down direction scrolling movements of the data on the screen.

Similar to the conventional PDA, the PDA 10 of FIG. 1 is constituted so that it can perform viewing and editing of the data by being interacted with the personal computer, can perform transmission and reception of an e-mail or facsimile by using the modem or the cellular phone, and can perform accessing the Internet on the screen of the display unit 14.

At the same time, by installing a certain application software in advance, the PDA 10 can perform execution of the software and can display the result of the execution on the screen of the display unit 14.

As previously described, the conventional PDA is constituted such that the stylus pen is brought into contact with the touch panel or tablet at the point of contact, and usually the user has to have the stylus pen by one hand and have the PDA main part by the other hand. Therefore, it is difficult for the user to operate the conventional PDA by the single hand easily.

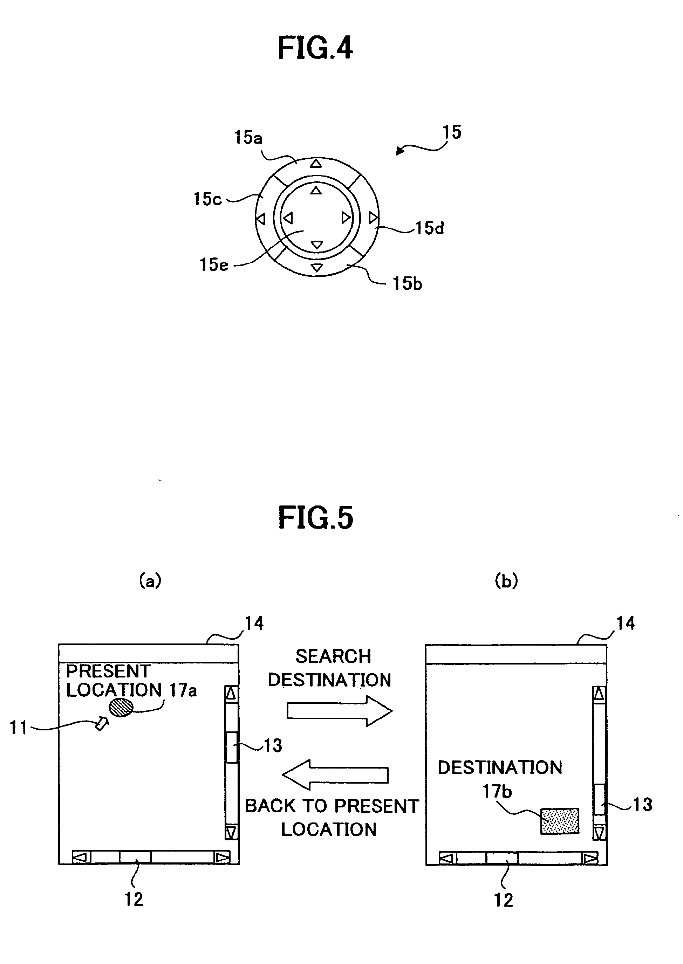

To obviate the problem, the portable electronic apparatus of FIG. 1 is constituted without using the stylus pen like the conventional PDA, so that the key operation unit 15 is constituted as shown in FIG. 4, and the cursor 11 which is the same as that in the display device of the personal computer is arranged on the display unit 14.

FIG. 4 shows the composition of the key operation unit 15 of the portable electronic apparatus of FIG. 1.

As shown in FIG. 4, the key operation unit 15 is arranged in the disc-like formation, and comprises the inside direction key 15e which is provided in the central inside position, and the four outside direction keys 15a, 15b, 15c and 15d which are provided to adjoin the outer periphery of the inside direction key 15e.

In the PDA 10 of FIG. 1, the display unit 14 displays the data on the screen based on the data stored in the memory region of the control unit. The plurality of pressure sensors each of which detects depression operation of one of the direction keys 15a to 15e by the user are arranged in the key operation unit 15, and each pressure sensor outputs the detection signal when the depression operation of the corresponding direction key is detected.

The control unit controls the displaying of the screen of the display unit 14 in accordance with the detection signal outputted from the key operation unit 15.

The PDA 10 of FIG. 1 is constituted as described above, and the following functions which will be explained below are assigned to each direction key of the key operation unit 15 of FIG. 4, so that the user can operate the PDA 10 by the single hand easily even when viewing and editing a large amount of data on the screen.

The first function is to output, when the inside direction key 15e is depressed solely, the cursor movement information for moving the cursor 11 on the screen of the display unit 14, to the CPU of the control unit, and this function is assigned to the inside direction key 15e.

Moreover, the second function is to output, when the inside direction key 15e is clicked solely, the control information for returning instantaneously the current screen of the display unit 14 to the previous screen containing the displayed position preceding the cursor 11, to the CPU of the control unit, and this function is also assigned to the inside direction key 15e.

Furthermore, the third function is to output, when the inside direction key 15e is depressed simultaneously with one of the four outside direction keys 15a, 15b, 15c and 15d, the scrolling operation information for carrying out scrolling movement of the screen of the display unit 14 in one of the four directions: up, down, left and right (which direction is determined by the outside direction key pushed simultaneously), to the CPU of the control unit, and this function is also assigned to the inside direction key 15e.

In the PDA 10 of this embodiment, the following functions which become active when one of the outside direction keys 15a, 15b, 15c and 15d is depressed solely and will be explained below are assigned to respective ones of the outside direction keys 15a, 15b, 15c and 15d in the key operation unit 15.

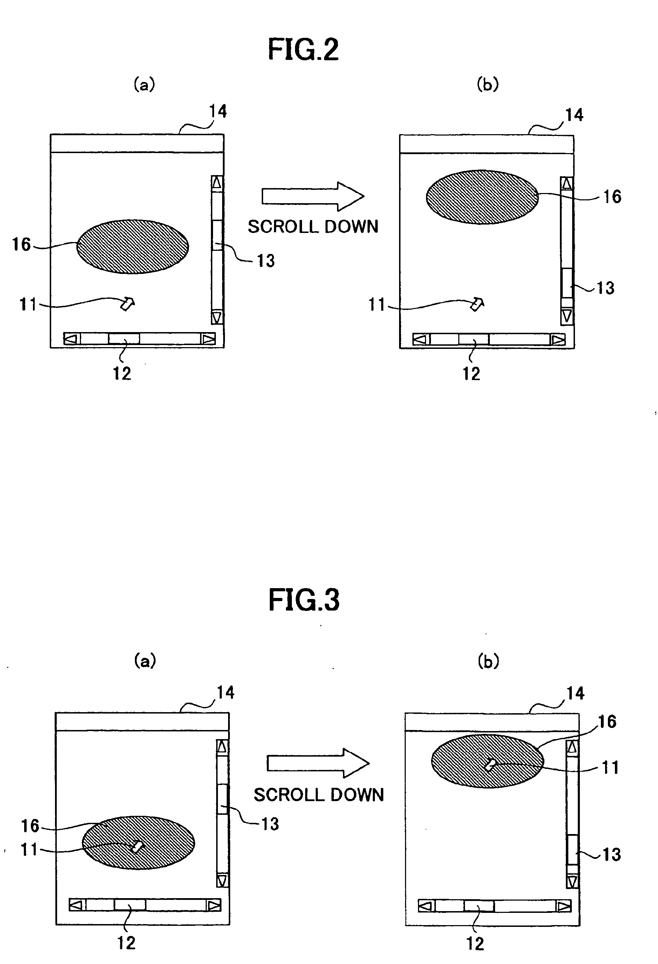

The first function is to output, when the outside direction key 15a is depressed solely, the first scrolling operation information (1) for carrying out scrolling-down movement of the screen of the display unit 14 with the displayed position of the cursor 11 being fixed (see FIG. 2), to the CPU of the control unit, and this function is assigned to the outside direction key 15a.

The second function is to output, when the outside direction key 15b is depressed solely, the second scrolling operation information (2) for carrying out scrolling-down movement of the screen of the display unit 14 containing the cursor 11 (see FIG. 3), to the CPU of the control unit, and this function is assigned to the outside direction key 15b.

The third function is to output, when the outside direction key 15d is depressed solely, the application operation information for performing setting operation of the application software (which is already installed) to the control unit on the screen of the display unit 14, to the CPU of the control unit, and this function is assigned to the outside direction key 15d. For example, this application software is a program which enables the control unit to have the additional function to enlarge the size of the text contained in the data displayed on the screen of the display unit 14 and helps the user easily view the contents of the data.

The fourth function is to output, when the outside direction key 15c is depressed solely, the application operation information for performing setting operation of another application software (which is already installed) to the control unit on the screen of the display unit 14, to the CPU of the control unit, and this function is assigned to the outside direction key 15c.

FIG. 2 is a diagram for explaining the first scrolling operation which causes the scrolling movement of the screen in the display unit 14 of the portable electronic apparatus of FIG. 1 with the displayed position of the cursor being fixed.

As indicated by (a) in FIG. 2, the cursor 11 and the indication data 16 are displayed on the screen of the display unit 14. In this state, if the user depresses the outside direction key 15a of the key operation unit 15 solely, the first scrolling operation information (1) is outputted to the CPU of the control unit.

The CPU of the control unit controls the displaying of the screen of the display unit 14 in accordance with the received first scrolling operation information (1), and this allows the scrolling-down movement of the screen of the display unit 14 to be carried out with the displayed position of the cursor 11 being fixed, as indicated by (b) in FIG. 2.

The scrolling operation of FIG. 2 is useful when a large amount of data is displayed on the screen of the display unit 14 of the PDA 10 and the user wishes to perform scrolling movement while following the text with the cursor 11.

FIG. 3 is a diagram for explaining the second scrolling operation which causes the scrolling movement of the screen together with the cursor in the display unit of the portable electronic apparatus of FIG. 1.

As indicated by (a) in FIG. 3, the indication data 16 including the cursor 11 is displayed on the screen of the display unit 14. In this state, if the user depresses the outside direction key 15b of the key operation unit 15 solely, the second scrolling operation information (2) is outputted to the CPU of the control unit.

The CPU of the control unit controls the displaying of the screen of the display unit 14 in accordance with the received second scrolling operation information (2), and this allows the scrolling-down movement of the indication data on the screen of the display unit 14 including the cursor 11 to be carried out, as indicated by (b) in FIG. 3.

The scrolling operation of FIG. 3 is suitable for the user viewing the indication data when a large amount of data (for example, newspaper data or map data) is displayed on the screen of the display unit 14 of the PDA 10.

Moreover, the portable electronic apparatus of FIG. 1 may be constituted so that the case where the user depresses each direction key of the key operation unit 15 in a normal manner, the case where the user depresses each direction key continuously for a period exceeding a predetermined time, the case where the user depresses the inside direction key and the outside direction key simultaneously, etc., are explicitly detected as being different depression operations of the direction keys.

Since the key operation unit 15 of FIG. 4 is arranged so that the direction keys are located collectively in the center thereof, this allows the user to easily perform the depression operation of one or more direction keys by the single hand (the thumb).

Moreover, while the user depresses the inside direction key 15e with the thumb to perform the movement operation of the cursor 11, the user can easily shift the thumb a little in order to depress the inside direction key and the outside direction key simultaneously. By performing this depression operation, the user can perform the scrolling movement of the screen while moving the cursor 11 on the screen of the display unit 14. This operation becomes the effective means for the user who operates the PDA 10 by the single hand and accesses the Internet.

FIG. 11 shows the composition of the control unit in the portable electronic apparatus of the invention.

The control unit of FIG. 11 is an example of the composition of the principal part of the control unit in the PDA 10 of FIG. 1. As shown in FIG. 11, this control unit comprises the CPU 20, the output circuit 21, the cursor movement detector 22, the scrolling movement detector 23, the application setting operation detector 24, the inside direction key depression detector 25, the outside direction key depression detector 26, and the inside/outside direction key depression detector 27.

The inside direction key pressure sensor 28 and the outside direction key pressure sensor 29 are provided in the key operation unit 15 of the PDA 10 as the pressure sensors for the inside direction key 15e and the outside direction key 15d.

It is necessary that the pressure sensor is provided respectively for each of the four outside direction keys 15a, 15b, 15c and 15d of the key operation unit 15. However, for the purpose of convenience of illustration, only the outside direction key pressure sensor 29 for the outside direction key 15d is shown in FIG. 11.

It is supposed that in the key operation unit 15 of the PDA 10 of this embodiment the pressure sensors are respectively provided for the other outside direction keys 15a, 15b and 15c as well.

When the inside direction key 15e is depressed, the inside direction key pressure sensor 28 of the key operation unit 15 detects the depression operation and outputs a detection signal to each of the inside direction key depression detector 25 and the inside/outside direction key depression detector 27.

Similarly, when the outside direction key 15d is depressed, the outside direction key pressure sensor 29 of the key operation unit 15 detects the depression operation and outputs a detection signal to each of the outside direction key depression detector 26 and the inside/outside direction key depression detector 27.

When the detection signal from the pressure sensor 28 and the detection signal from the pressure sensor 29 are simultaneously received, the inside/outside direction key depression detector 27 output a simultaneous depression detection signal, which indicates that the depression operation of the inside direction key 15e and the outside direction key 15d is carried out simultaneously, to each of the inside direction key depression detector 25, the outside direction key depression detector 26, and the scrolling movement detector 23, respectively.

When only the detection signal from the pressure sensor 28 is received without receiving the simultaneous depression detection signal from the depression detector 27, the inside direction key depression detector 25 outputs an inside direction key independent depression detection signal, which indicates that the inside direction key 15e is depressed solely, to the cursor movement detector 22.

When only the detection signal from the pressure sensor 29 is received without receiving the simultaneous depression detection signal from the depression detector 27, the outside direction key depression detector 26 outputs an outside direction key independent depression detection signal, which indicates that the outside direction key 15d is depressed solely, to the application setting operation detector 24.

The cursor movement detector 22 outputs the cursor movement information for moving the cursor 11 on the screen of the display unit 14, to the CPU 20 in accordance with the inside direction key independent depression detection signal outputted from the inside direction key depression detector 25. The CPU 20 outputs the cursor movement information outputted from the cursor movement detector 22, to the display unit 14 through the output circuit 21. Therefore, the cursor 11 is moved on the screen of the display unit 14 in the direction which is specified by the user.

The scrolling movement detector 23 outputs the scrolling movement information for carrying out scrolling movement of the screen of the display unit 14, to the CPU 20 in accordance with the simultaneous depression detection signal outputted from the simultaneous depression detector 27. The CPU 20 outputs the scrolling movement information outputted from the scrolling movement detector 23, to the display unit 14 through the output circuit 21. Therefore, the screen of the display unit 14 is subjected to scrolling movement in the direction which is specified by the user (which direction is determined by the outside direction key which is depressed simultaneously with the inside direction key 15e).

The application setting operation detector 24 outputs the application setting operation information for performing setting operation of the application software to the CPU 20 on the screen of the display unit 14 in accordance with the outside direction key independent depression detection signal outputted from the outside direction key depression detector 26. The CPU 20 outputs the application setting operation information outputted from the application setting operation detector 24, to the display unit 14 through the output circuit 21. Therefore, the setting operation (starting or finishing) of the application software is performed on the screen of the display unit 14.

For example, this application software is a program which enables the control unit to have the additional function to enlarge the size of the text contained in the data displayed on the screen of the display unit 14 and helps the user easily view the contents of the data.

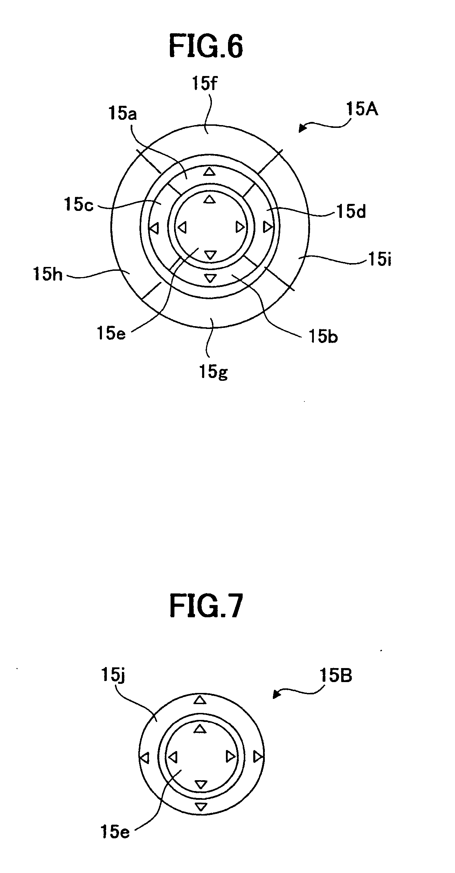

FIG. 6 shows a modification of the key operation unit in the portable electronic apparatus of FIG. 1.

The key operation unit 15A shown in FIG. 6 is an example in which the plurality of direction keys are arranged in the three steps. The key operation unit 15A is constituted so that the outside direction keys 15f, 15g, 15h, and 15i are further provided to adjoin the outer periphery of the outside direction keys 15a, 15b, 15c, and 15d in the composition of FIG. 4, respectively.

Similarly, the key operation unit of the portable electronic apparatus of FIG. 1 may be constituted so that the plurality of direction keys are arranged in the four or more steps.

FIG. 7 shows another modification of the key operation unit of the portable electronic apparatus of FIG. 1.

The key operation unit 15B shown in FIG. 7 is an example in which the plurality of direction keys are arranged in the two steps and the outside direction key 15j wherein the four outside direction keys are formed into the integral part is provided instead of the four outside direction keys 15a, 15b, 15c and 15d in the composition of FIG. 4.

According to the composition of the key operation unit 15B of FIG. 7, the user is allowed to easily perform not only the depression operation causing the scrolling movement in any of the four directions of up, down, left and right, but also the depression operation causing the scrolling movement in any slanted direction when the inside direction key and the outside direction key are depressed simultaneously.

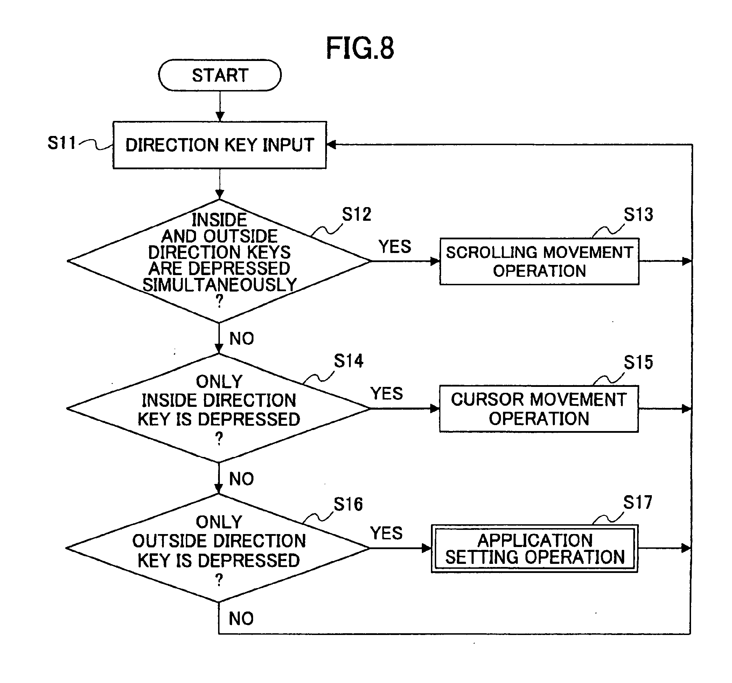

FIG. 8 is a flowchart for explaining the control procedure when performing the basic operation of the portable electronic apparatus of the invention.

The control procedure of FIG. 8 is performed by the control unit (the CPU 20 of FIG. 11) of the portable electronic apparatus of the invention in accordance with the program stored in the memory (not shown) of the control unit, in order to control the displaying of the screen of the display unit 14.

In the control procedure of FIG. 8, the CPU 20 in step S11 monitors the occurrence of the user's depression operation on any of the direction keys of the key operation unit 15. When the user performs the depression operation on any of the direction keys of the key operation unit 15, the control is transferred to the following step S12.

In step S12, the CPU 20 determines whether the inside direction key 15e is depressed simultaneously with one of the outside direction keys 15a-15d.

If the determination result of step S12 is YES, in step S13, the CPU 20 outputs the scrolling movement information outputted from the scrolling movement detector 23, to the display unit 14 through the output circuit 21. When the step S13 is completed, the control is returned to the step S11.

If the determination result of step S12 is NO, the control is transferred to the following stepS14.

In step S 14, the CPU 20 determines whether the inside direction key of inside 15e is depressed solely.

If the determination result of step S 14 is YES, in step S15, the CPU 20 outputs the cursor movement information outputted from the cursor movement detector 22, to the display unit 14 through the output circuit 21. When the step S15 is completed, the control is returned to the step S11.

If the determination result of step S14 is NO, the control is transferred to the following step S16. In step S16, the CPU 20 determines whether the outside direction key 15d is depressed solely.

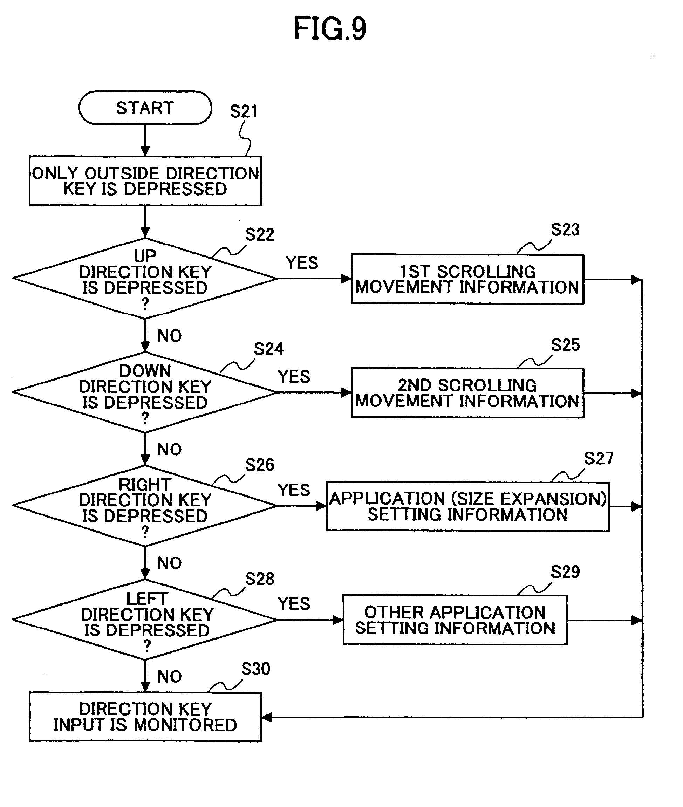

If the determination result of step S16 is YES, in step S17, the CPU 20 outputs the application setting information outputted from the application setting operation detector 24, to the display unit 14 through the output circuit 21 (refer to FIG. 9). When the step S17 is completed, or when the determination result of step S16 is NO, the control is returned to the step S11.

FIG. 9 is a flowchart for explaining the control procedure when performing the setting operation of the application software.

The control procedure of FIG. 9 is performed by the control unit (the CPU 20 of FIG. 11) of the portable electronic apparatus of the invention in accordance with the program stored in the memory (not shown) of the control unit, in order to control the displaying of the screen of the display unit 14.

First, when the CPU 20 determines in step S21 that one of the outside direction keys of the key operation unit 15 is depressed solely (for example, the case where the determination result of step S16 in FIG. 8 is YES is included), the control procedure of FIG. 9 is started.

In step S22, the CPU 20 determines whether the outside direction key 15a is depressed solely.

If the determination result of step S22 is YES, in step S23, the CPU 20 outputs the first scrolling movement information (1) (refer to FIG. 2) to the display unit 14 through the output circuit 21. When the step S23 is completed, the control is transferred to the following step S30.

If the determination result of step S22 is NO, in the following step S24, the CPU 20 determines whether the outside direction key 15b is depressed solely.

If the determination result of step S24 is YES, in step S25, the CPU 20 outputs the second scrolling movement information (2) (refer to FIG. 3) to the display unit 14 through the output circuit 21. When the step S25 is completed, the control is transferred to step S30.

If the determination result of step S24 is NO, in the following step S26, the CPU 20 determines whether the outside direction key 15d is depressed solely.

If the determination result of step S26 is YES, in step S27, the CPU 20 outputs the application setting information outputted from the application setting operation detector 24, to the display unit 14 through the output circuit 21.

When the application setting information outputted at this time is the control information for starting the application software, the size of the text in the data displayed on the screen of the display unit 14 is enlarged by the additional function.

On the other hand, if the independent depression operation of the outside direction key 15d is performed by the user again, the application setting information is converted into the control information for finishing the application software, and the control information is outputted. When the step S27 is completed, the control is transferred to step S30.

If the determination result of step S26 is NO, in the following step S28, the CPU 20 determines whether the outside direction key 15c is depressed solely.

If the determination result of step S28 is YES, in step S29, the CPU 20 outputs the application setting information for performing the setting operation of other application software, to the display unit 14 through the output circuit 21. When the step S29 is completed, the control is transferred to step S30.

In step S30, the CPU 20 monitors the occurrence of the depression operation on one of the direction keys of the key operation unit 15.

As described above, when the user performs depression operation on one of the direction keys of the key operation unit 15, the control procedure shown in FIG. 8 or the other control procedure is started.

Next, FIG. 5 is a diagram for explaining the application of the second scrolling operation.

This example shows the application of the second scrolling operation at the time of starting map viewing software.

First, execution of the map viewing software is started. Next, the second scrolling operation information (2) is set up. And the inside direction key 15e is depressed solely, and the cursor 11 is moved to the position where the image 17a which indicates the present location in the map data is pointed to.

At this time, as indicated by (a) in FIG. 5, the image 17a which indicates the present location in the map data, and the cursor 11 are displayed on the screen of the display unit 14.

If the outside direction key 15b is depressed solely in this state, the second scrolling operation information is outputted to the CPU 20 of the control unit, so that the scrolling-down movement of the screen of the display unit 14 together with the cursor 11 is carried out.

By repeating the above operation, the image 17b which indicates the destination in the map data will be searched on the screen of the display unit 14 of the PDA 10 as indicated by (b) in FIG. 5.

And when the user desires to return to the image 17a which indicates the present location in the map data, what is needed for the user is just to click the inside direction key 15e of the key operation unit 15. Then, the screen of the display unit 14 is instantaneously returned to the original state in which the image 17a and the cursor 11 are displayed, as indicated by (a) in FIG. 5.

The example of FIG. 5 is useful when the user intends to view a large amount of data (newspaper data, map data, etc.) having a large display size on the screen of the display unit 14.

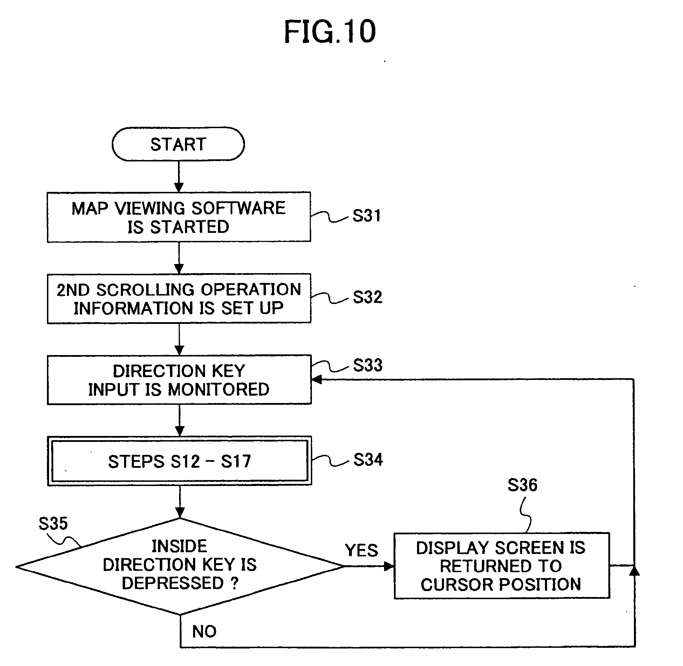

FIG. 10 is a flowchart for explaining the control procedure when starting the map viewing software and performing the viewing operation of the map data shown in FIG. 5.

The control procedure of FIG. 10 is performed by the control unit (the CPU 20 of FIG. 11) of the portable electronic apparatus of the invention in accordance with the program stored in the memory (not shown) of the control unit, in order to control the displaying of the screen of the display unit 14.

In the control procedure of FIG. 10, the CPU 20 in step S31 starts execution of the map viewing software. For example, at this step S31, the user depresses the outside direction key 15b of the key operation unit 15 solely, and the CPU 20 starts the execution of the map viewing software accordingly.

In step S32, the CPU 20 sets up the second scrolling operation information (2).

In step S33, the CPU 20 monitors the occurrence of depression operation on any of the direction keys of the key operation unit 15.

As mentioned above, when the user performs depression operation on any of the direction keys of the key operation unit 15, the control is transferred to the following step S34.

In step S34, the CPU 20 performs the procedure which is the same as the steps S12-S17 in the control procedure of FIG. 8. The user performs the viewing operation of the map data by using the cursor movement operation, the scrolling movement operation, etc.

In step S35, the CPU 20 determines whether the inside direction key 15e is clicked.

When the determination result of step S35 is YES, in step S36, the CPU 20 controls the displaying of the screen of the display unit 14 in accordance with the click operation of the inside direction key 15e. Then, the screen of the display unit 14 is returned instantaneously to the previous screen containing the displayed position preceding the cursor 11.

When the step S36 is completed, or when the determination result of step S35 is NO, the control is returned to the step S33.

As described in the foregoing, according to the portable electronic apparatus of the present invention, even when viewing and editing a large amount of data on the screen of the display unit, the user can operate the electronic apparatus easily by the single hand (the thumb), and the operability can be raised.

The present invention is not limited to the above-described embodiments, and variations and modifications may be made without departing from the scope of the present invention.

## Claims

1. A portable electronic apparatus (10) which includes a display unit (14), a key operation unit (15) which detects depression operation of each of a first direction key (15e) and a second direction key (15a-15d) and outputs a detection signal, and a control unit which controls displaying of a screen of the display unit in accordance with a detection signal from the key operation unit (15), the control unit comprising:
a cursor movement detection unit (22) outputting a cursor movement information for moving the cursor (11) on the screen of the display unit (14) in accordance with a detection signal outputted when the first direction key (15e) is depressed solely;
**characterized by**
a scrolling movement detection unit (23) outputting a scrolling operation information for carrying out scrolling movement of the screen of the display unit (14) in accordance with a detection signal outputted when both the first direction key (15e) and the second direction key (15a-15d) are depressed simultaneously,
wherein the key operation unit (15) is arranged so that the first and second direction keys (15e, 15a-15d) are located collectively in the center of the key operation unit (15), in order to allow a user to depress both the first and second direction keys (15e, 15a-15d) simultaneously by one finger.

2. The portable electronic apparatus according to claim 1,
wherein the control unit (20) comprises a unit (21) outputting a first scrolling operation information for carrying out scrolling movement of the screen of the display unit (14) with the displayed position of the cursor (11) being fixed.

3. The portable electronic apparatus according to claim 1,
wherein the control unit (20) comprises a unit (11) outputting a second scrolling operation information for carrying out scrolling movement of the screen of the display unit (14) containing the cursor (11).

4. The portable electronic apparatus according to claim 1,
wherein the control unit (20) comprises an application setting detection unit which outputs an application setting information for performing an application setting operation on the screen of the display unit (14), in accordance with a detection signal outputted when the second direction key (15a-15d) is depressed solely.

5. The portable electronic apparatus according to claim 1,
wherein the cursor movement information which is outputted by the cursor movement detection unit (22) when the first direction key (15e) is clicked is a control information for returning the screen of the display unit (14) to a previous screen containing the cursor (11).

## Patentansprüche

1. Ein tragbares elektronisches Gerät (10) aufweisend eine Anzeigeeinheit (14), eine Tastenbedieneinheit (15), die ein Niederdrücken jeweils einer ersten Richtungstaste (15e) und einer zweiten Richtungstaste (15a - 15d) erfasst und ein Erfassungssignal ausgibt, und eine Steuereinheit, die eine Ausgabe eines Bildschirms der Anzeigeeinheit entsprechend eines Erfassungssignals von der Tastenbedieneinheit (15) steuert, wobei die Steuereinheit eine Cursorbewegungserfassungseinheit (22) aufweist, die eine Cursorbewegungsinformation zum Bewegen des Cursors (11) auf dem Bildschirm der Anzeigeeinheit (14) entsprechend eines Erfassungssignals ausgibt, das ausgegeben wird, wenn ausschließlich die erste Richtungstaste (15e) gedrückt wird,
**gekennzeichnet durch**
eine Scrollbewegungserfassungseinheit (23) zum Ausgeben einer Scrollbedieninformation zum Ausführen einer Scrollbewegung des Bildschirms der Anzeigeeinheit (14) entsprechend eines Erfassungssignals, das ausgegeben wird, wenn sowohl die erste Richtungstaste (15e) als auch die zweite Richtungstaste (15a - 15d) gleichzeitig gedrückt werden,
wobei die Tastenbedieneinheit (15) derart eingerichtet ist, dass die ersten und zweiten Richtungstasten (15e, 15a - 15d) gemeinsam in der Mitte der Tastenbedieneinheit (15) angeordnet sind, um dem Benutzer zu erlauben, sowohl die ersten als auch zweiten Richtungstasten (15e, 15a - 15d) gleichzeitig mit einem Finger zu drücken.

2. Tragbares elektronisches Gerät gemäß Anspruch 1,
wobei die Steuereinheit (20) eine Einheit (21) aufweist, die eine erste Scrollbedieninformation ausgibt, um die Scrollbewegung des Bildschirms der Anzeigeeinheit (14) auszuführen, wobei die angezeigte Position des Cursors (11) fest ist.

3. Tragbares elektronisches Gerät gemäß Anspruch 1,
wobei die Steuereinheit (20) eine Einheit (11) aufweist, die eine zweite Scrollbedieninformation zum Ausführen der Scrollbewegung des Bildschirms der Anzeigeinheit (14), die den Cursor (11) enthält, ausgibt.

4. Tragbares elektronisches Gerät gemäß Anspruch 1,
wobei die Steuereinheit (20) eine Anwendungseinstellungserfassungseinheit aufweist, die eine Anwendungseinstellungsinformation zum Durchführen einer Anwendungseinstellungsbedienung auf dem Bildschirm der Anzeigeeinheit (14) entsprechend eines Erfassungssignals ausgibt, welches ausgegeben wird, wenn ausschließlich die zweite Richtungstaste (15a - 15d) gedrückt wird.

5. Tragbares elektronisches Gerät gemäß Anspruch 1,
wobei die Cursorbewegungsinformation, die von der Cursorbewegungsinformationserfassungseinheit (22) ausgegeben wird, wenn die erste Richtungstaste (15e) geklickt wird, eine Steuerinformation ist, um den Bildschirm der Anzeigeeinheit (14) auf einen vorhergehenden Bildschirm, der den Cursor (11) enthält, zurück zu bringen.

## Revendications

1. Dispositif électronique portable (10) incluant une unité d'affichage (14), une unité d'actionnement de touche (15) qui détecte une opération d'appui sur chaque touche parmi une première touche de direction (15e) et une seconde touche de direction (15a à 15d) et délivre en sortie un signal de détection et une unité de commande qui commande l'affichage d'un écran de l'unité d'affichage en fonction d'un signal de détection provenant de l'unité d'actionnement de touche (15), l'unité de commande comprenant :
une unité de détection de mouvement de curseur (22) délivrant en sortie une information de mouvement de curseur pour déplacer le curseur (11) sur l'écran de l'unité d'affichage (14) en fonction d'un signal de détection délivré en sortie lorsque seule la première touche de direction (15e) est enfoncée ;
**caractérisé par**
une unité de détection de mouvement de défilement (23) délivrant en sortie une information d'actionnement de défilement pour effectuer un mouvement de défilement de l'écran de l'unité d'affichage (14) en fonction d'un signal de détection délivré en sortie lorsqu'à la fois la première touche de direction (15e) et la seconde touche de direction (15a à 15d) sont enfoncées simultanément,
dans lequel l'unité d'actionnement de touche (15) est agencée de façon que les première et seconde touches de direction (15e, 15a à 15d) soient disposées collectivement au centre de l'unité d'actionnement de touche (15) pour permettre à un utilisateur d'appuyer avec un doigt en même temps à la fois sur les première et seconde touches de direction (15e, 15a à 15d).

2. Dispositif électronique portable selon la revendication 1,
dans lequel l'unité de commande (20) comprend une unité (21) délivrant en sortie une première information d'actionnement de défilement pour exécuter un mouvement de défilement de l'écran de l'unité d'affichage (14), la position affichée du curseur (11) étant fixe.

3. Dispositif électronique portable selon la revendication 1,
dans lequel l'unité de commande (20) comprend une unité (11) délivrant en sortie une seconde information d'actionnement de défilement pour exécuter un mouvement de défilement de l'écran de l'unité d'affichage (14) contenant le curseur (11).

4. Dispositif électronique portable selon la revendication 1,
dans lequel l'unité de commande (20) comprend une unité de détection de réglage d'application délivrant en sortie une information de réglage d'application pour effectuer une opération de réglage d'application sur l'écran de l'unité d'affichage (14) en fonction d'un signal de détection délivré en sortie lorsque seule la seconde touche de direction (15a à 15d) est enfoncée.

5. Dispositif électronique portable selon la revendication 1,
dans lequel l'information de mouvement de curseur qui est délivrée en sortie par l'unité de détection de mouvement de curseur (22) lorsqu'on clique sur la première touche de direction (15e) est une information de commande pour ramener l'écran de l'unité d'affichage (14) à un écran précédent contenant le curseur (11).
